# EUROPÄISCHE PATENTANMELDUNG

(11) **EP 1 233 192 A2**
(43) Veröffentlichungstag der Anmeldung: **21.08.2002**
(21) Anmeldenummer: 02002121.8
(22) Anmeldetag: 29.01.2002
(51) Int. Cl.: F16B 7/04

(54) **Verbinder eines Stangenelements mit einem Anschlusssteil**

(30) Priorität: 20.02.2001 DE 10107863
(71) Anmelder: Rixen, Wolfgang, Dipl.-Ing., 42655 Solingen (DE); Pies, Gerrit, 42659 Solingen (DE)
(72) Erfinder: Rixen, Wolfgang, Dipl.-Ing., 42655 Solingen (DE); Pies, Gerrit, 42659 Solingen (DE)
(74) Vertreter: Draudt, Axel Hermann Christian, Dipl.-Ing.

(57) **Zusammenfassung**

Verbinder eines Stangenelements (10) mit einem Anschlußteil (11), mit einem an das Stangenelement (10), insbesondere an ein Rohr angrenzenden Ringelement (12), das mindestens eine Eingriffstasche (13) hat, und mit mindestens einer betätigbaren Klemmbacke (14,15), an die das Anschlußteil (11) angeschlossen ist und die in die Eingriffstasche (13) eingreift, sich am Außenumfang (10') des Stangenelements (10) abstützt und mit einem Spannteil (16) am Ringelement (12) festlegbar ist.

Eine einfache Ausbildung des Verbinders wird dadurch erreicht, daß das Ringelement (12) an das Stangenelement (10) lose angrenzt und mit der Klemmbacke (14,15) an dem Stangenelement (10) festzuklemmen ist.

## Beschreibung

Die Erfindung bezieht sich auf einen Verbinder eines Stangenelements mit einem Anschlußteil, mit einem an das Stangenelement, insbesondere an ein Rohr angrenzenden Ringelement das mindestens eine Eingriffstasche hat, und mit mindestens einer betätigbaren Klemmbacke an die das Anschlußteil angeschlossen ist und die in die Eingriffstasche eingreift, sich am Außenumfang des Stangenelements abstützt und mit einem Spannteil am Ringelement festlegbar ist.

Ein Verbinder mit den vorgenannten Merkmalen ist aus der DE-C-40 21 602 bekannt. Das Stangenelement ist ein Rohr, an dessen Außenumfang ein Ring durch Verschweißen befestigt ist. Der Ring ist oberhalb und unterhalb der Schweißstelle jeweils ringsum nach außen aufgebogen, so daß oben und unten jeweils eine ringförmige Eingriffstasche vorhanden ist. In beide Eingriffstaschen greift jeweils eine Klemmbacke ein. Die obere Klemmbacke ist mit dem Anschlußteil einstückig, an dem ein Rohr verschweißt ist. An der oberen Klemmbacke ist eine untere Klemmbacke gelenkig befestigt, die in die untere Eingriffstasche eingreift. Die an das Stangenelement anzuschließende Stange wird mit der oberen Klemmbacke in die obere Eingriffstasche eingehängt und die untere Klemmbacke wird mit einem Keil in die untere Eingriffstasche eingebracht und dort durch den Keil gehalten. Der bekannte Verbinder ist für den Gerüstbau bestimmt und geeignet. Dafür ist es gerechtfertigt, daß in größerem Umfang vorbereitende Arbeiten durchgeführt werden müssen, wie das Verschweißen des Ringelements am Stangenelement und des Anschlußteils an der anzuschließenden Stange.

Demgegenüber liegt der Erfindung die Aufgabe zugrunde, einen Verbinder mit den eingangs genannten Merkmalen so zu verbessern, daß fachmännisch durchzuführende vorbereitende Arbeiten vermieden werden.

Diese Aufgabe wird dadurch gelöst, daß das Ringelement an das Stangenelement lose angrenzt und mit der Klemmbacke an dem Stangenelement festzuklemmen ist.

Für die Erfindung ist von Bedeutung, daß ein loses Ringelement eingesetzt wird und trotzdem eine feste Verbindung zwischen dem Stangenelement und einem daran zu befestigenden weiteren Bauteil erreicht wird. Da das Ringelement lose angewendet wird, also nicht am Stangenelement durch Verschweißen oder sonstwie zu befestigen ist, werden entsprechende vorbereitende Arbeiten vermieden. Die Befestigung kann auch an Stangenelementen aus Werkstoffen durchgeführt werden, die nur schwer zu schweißen sind und/oder beim Schweißen bereichsweise unansehnlich werden. Vor allem ist jedoch von Bedeutung, daß das lose Ringelement beim Zusammenbau des Stangenelements mit einem anzuschließenden Bauteil bedarfsweise positioniert werden kann. Es ist auch möglich, nach dem Zusammenbau eine Positionskorrektur durchzuführen. Der Verbinder ist infolgedessen besonders vielseitig einzusetzen und ermöglicht es, die ihn verwendenden Konstruktionen vielfältig zu variieren.

Zweckmäßigerweise wird der Verbinder so ausgebildet, daß das Ringelement ein das Stangenelement umgreifender geschlossener Ring ist. Der geschlossene Ring kann von einem Ende des Stangenelements aufgeschoben werden und ist an beliebiger Stelle des Stangenelements zu positionieren, um anschließend das Anschlußteil zu befestigen. Der geschlossene Ring liegt großflächig am Stangenelement an, so daß ein Verrutschen des Rings am Stangenelement wegen hoher Reibung ausgeschlossen werden kann. Die Flächenpressung zwischen dem Stangenelement und dem Ring ist gering, so daß Verformungen der Bauteile vermieden werden.

Zweckmäßigerweise ist das Ringelement einstückig. Das Ringelement ist infolgedessen hochfest und für die meisten Anwendungsfälle einzusetzen, bei denen es über ein Ende des Stangenelements auf dieses aufgeschoben werden kann.

Falls das Aufschieben des Ringelements auf das Stangenelement von einem Ende her nicht möglich ist, kann der Verbinder so ausgebildet werden, daß das Ringelement aus zwei Teilen besteht, die einen zusammengesetzten geschlossenen Ring bilden. Die beiden Teile können zwischen den Enden des Stangenelements zusammengesetzt werden.

Eine zweckmäßige Ausgestaltung der vorbeschriebenen Ausführungsform liegt vor, wenn die beiden Teile des Ringelements stangenelementparallel zusammengesetzt miteinander verbunden sind. Durch das stangenelementparallele Zusammensetzen ergibt sich ein Verhaken in Umfangsrichtung des Rings, so daß sich dessen Teile nicht ungewollt trennen können.

Eine Weiterbildung des Verbinders kann dadurch erfolgen, daß das Ringelement als Teilstück eines geschlossenen Ringes ausgebildet ist und an dem Stangenelement mit einem Befestigungselement lose angebracht ist. Die Lose kann so bemessen werden, daß in begrenztem Umfang eine Korrektur der Position des Anschlußteils möglich ist, so daß die Position einer anzuschließenden Stange entsprechend korrigiert werden kann. Das Ringelement bzw. das Teilstück eines geschlossenen Ringes umgibt das Stangenelement nur auf einem entsprechenden Anteil des Umfangs dieses Stangenelements, das also außerhalb des Anschlußbereichs des Anschlußteils frei von irgendwelchen Konstruktionsteilen des Verbinders sein kann. Das gibt eine entsprechend ansehnliche Verbindungsstelle.

Eine Ausgestaltung der vorbeschriebenen Ausführungsform kann dadurch gekennzeichnet sein, daß das Befestigungselement an einem Widerlagerstück des Stangenelements angreift, und daß sich das im Inneren des Stangenelements befindliche Widerlagerstück mit einem das Befestigungselement umfassenden und eine weite Durchgriffsausnehmung durchgreifenden Ringbund an dem Teilstück abstützt. Beim Betätigen des Befestigungselements können das Widerlagerstück und das Ringelement miteinander verspannt werden, ohne dabei das Stangenelement einzuklemmen. Das Ringelement bleibt entsprechend lose am Stangenelement. Die erwünschte begrenzte Verstellbarkeit des Ringelements bleibt entsprechend der Weite der Durchgriffsausnehmung gewährleistet.

Es ist zu bevorzugen, daß die Eingriffstasche an den Außenumfang des Stangenelements angrenzt. Eine in die Klemmbacke eingreifende Eingriffstasche kann sich infolgedessen am Außenumfang des Stangenelements abstützen, wenn sie betätigt wird, wenn also das Anschlußteil am Stangenelement festgelegt wird.

Die oben genannte Aufgabe kann auch dadurch gelöst werden, daß das Ringelement als Teilstück eines geschlossenen Ringes ausgebildet ist und an dem Stangenelement mit einem Befestigungselement fest angebracht ist, das an einem Widerlagerstück des Stangenelements angreift, und daß die Klemmbacke an dem Teilstück festklemmbar ist. In diesem Fall wird auf eine lose Befestigung des Ringelements bzw. des dieses Ringelement bildenden Teilstücks am Stangenelement verzichtet. Das ist akzeptabel, wenn es auf eine Justierung oder nachträgliche Änderung des Sitzes des Anschlußteils nicht ankommt. Darüber hinaus wird aber auch mit diesem Verbinder eine ansehnliche Befestigungsstelle ausgebildet und es ist nicht erforderlich das Ringelement durch Verschweißung zu befestigen.

Für alle vorbeschriebenen Ausführungsformen ist es zweckmäßig, daß das Ringelement einen trapezförmigen Querschnitt hat, dessen Flanken je eine Eingriffstasche mit dem Stangenelement bilden. Ein derartiges Ringelement kann volumenarm ausgebildet werden und ist trotzdem hinreichend stabil und geeignet, einer stabilen Befestigung des Anschlußteils zu dienen.

Insbesondere bei der vorbeschriebenen Ausführungsform ist es zweckmäßig, den Verbinder so auszubilden, daß zwei Klemmbacken vorhanden sind, die beide das Ringelement zwischen sich einspannen und dabei an dem Stangenelement festklemmen. Die Klemmbacken stützen sich jeweils am Stangenelement ab, ziehen das Ringelement im Angriffsbereich des Anschlußteils vom Stangenelement weg, so daß sich das Ringelement im übrigen fest an das Stangenelement anlegen kann.

Eine konstruktiv vorteilhafte Ausführung ist dadurch gekennzeichnet, daß zwei praktisch querschnittsgleiche Klemmbacken miteinander verschraubt sind. Die querschnittsgleichen Klemmbacken lassen sich optimal an das einen trapezförmigen Querschnitt aufweisende Ringelement anpassen. Sie lassen sich auch optimal an eine Verschraubung anpassen, zum Beispiel mit Spannschrauben.

Es ist zu bevorzugen, einen Verbinder so auszubilden, daß eine einzige Spannschraube vorhanden ist, oder daß zwei Spannschrauben in eine zwischen zwei Klemmbacken vorhandene, bedarfsweise Anschlußmittel aufweisende Innengewindehülse eingeschraubt sind. Eine einzige Spannschraube ist im Sinne einer einfachen Ausbildung des Anschlußteils vorteilhaft, während zwei Spannschrauben die Ausgestaltungspalette des Anschlußteils vergrößern, zum Beispiel durch Einsatz einer Innengewindehülse, die weiteren Befestigungsaufgaben dienen kann.

Der Verbinder kann dahingehend ausgestaltet werden, daß das Anschlußteil direkt an die Klemmbacke oder an ein mit letzterer fest verbundenes Verbindungsteil angeschlossen ist. Es ergeben sich entsprechende Gestaltungsfreiheiten im Verbindungsbereich.

Zu bevorzugen ist, wenn das Anschlußteil mittels zweier Klemmbacken angeschlossen ist. In diesem Fall können diejenigen Klemmbacken eingesetzt werden, die auch dem Anschluß des Verbinders an das Ringelement dienen.

Für die vorbeschriebene Ausführungsform ist zu bevorzugen, daß ein Anschlußquerschnitt des Anschlußteils trapezförmig ausgebildet ist. Dann können die Klemmbacken im Querschnitt symmetrisch ausgebildet werden, was eine gleichmäßige Verteilung der Belastung der Klemmbacken bei ihrem Verspannen zur Folge hat. Eine Weiterbildung des Verbinders kann dahingehend erfolgen, daß das Anschlußteil eine sich an einer Stirnkante eines anzuschließenden Rohrs abstützende Rohrabschlußscheibe ist, die einen in einer Rohrachse vorspringenden Anschlußquerschnitt aufweist. Die Rohrabschlußscheibe ist ein Kupplungsstück, mit dem das Anschlußteil in gewünschter Weise am anzuschließenden Rohr positioniert werden kann, vor allem in radialer Richtung. Es übernimmt zugleich die Positionierung derjenigen Bauteile, die das Anschlußteil am Rohr, bzw. am Rohrende befestigen.

Für eine solche Befestigung des Rohranschlußteils am Rohr ist es zweckmäßig, den Verbinder so auszubilden, daß in einem anzuschließenden Rohr ein Spreizkorb angeordnet ist, der in einer sich zum Anschlußteil verjüngenden Ausnehmung einen Spreizkonus aufweist, in den eine das Anschlußteil durchsetzende und sich daran abstützende Spreizschraube eingeschraubt ist. Mit dem Spreizkonus kann der Spreizkorb im anzuschließenden Rohr gespreizt werden und sich an dessen Innenwand fest anlegen. Die Stärke der Spreizung bestimmt in Verbindung mit der Ausgestaltung des Spreizkorbs die Auszugkräfte, die der Verbinder in Bezug auf das anzuschließende Rohr gewährleisten kann.

Besonders vorteilhaft ist es, wenn der Spreizkorb Längsschlitze hat, die wechselweise von einem Korbende bis in die Nähe des anderen Korbendes reichen. in diesem Fall kann der Spreizkorb über seine gesamte Länge gleichmäßig gegen die Innenwand des anzuschließenden Rohrs gespreizt werden. Es ergibt sich eine gleichmäßige Verteilung der Flächenpressung zwischen dem Spreizkorb und der Innenwand des anzuschließenden Rohrs.

Der Verbinder ist nicht darauf beschränkt, daß nur ein einziges Anschlußteil und damit nur ein einziges Rohr an ein Stangenelement angeschlossen werden könnte. Der Verbinder kann vielmehr so ausgebildet sein, daß an dem Ringelement mehrere über dessen Umfang verteilte Klemmbacken mit an ihnen angeschlossenen Anschlußteilen angreifen. In diesem Fall kann an jedem angeschlossenen Anschlußteil eine Stange oder ein Rohr angeschlossen werden, so daß das Ringelement die Funktion eines Knotens für eine Vielzahl von Anschlüssen übernimmt.

Die Erfindung wird anhand von in der Zeichnung dargestellten Ausführungsbeispielen erläutert. Es zeigt:
- Fig.1: einen Querschnitt durch einen zwei Rohre miteinander verbindenden Verbinder,
- Fig.2: eine Aufsicht auf den Verbinder der Fig.1,
- Fig.3: den Schnitt A-A der Fig.1,
- Fig.4: den Schnitt B-B der Fig.1,
- Fig.5: eine der Fig.1 ähnliche Darstellung eines Verbinders mit einem in Vergleich zu Fig.1 abweichend ausgebildeten Anschlußteil,
- Fig.6: eine Aufsicht des Verbinders der Fig.5 mit einem angeschlossenen Plattenteil,
- Fig.7: eine der Fig.1 entsprechende Darstellung, mit einem Ringelement, jedoch ohne weitere Ausgestaltung des Verbinders,
- Fig.8: eine Schnittdarstellung C-C der Fig.7,
- Fig.9a: eine perspektivische Darstellung eines zweiteiligen zusammengebauten Ringelements, und
- Fig.9b: die auseinandergebauten Teile des Ringelements der Fig.9a in perspektivischer Darstellung.

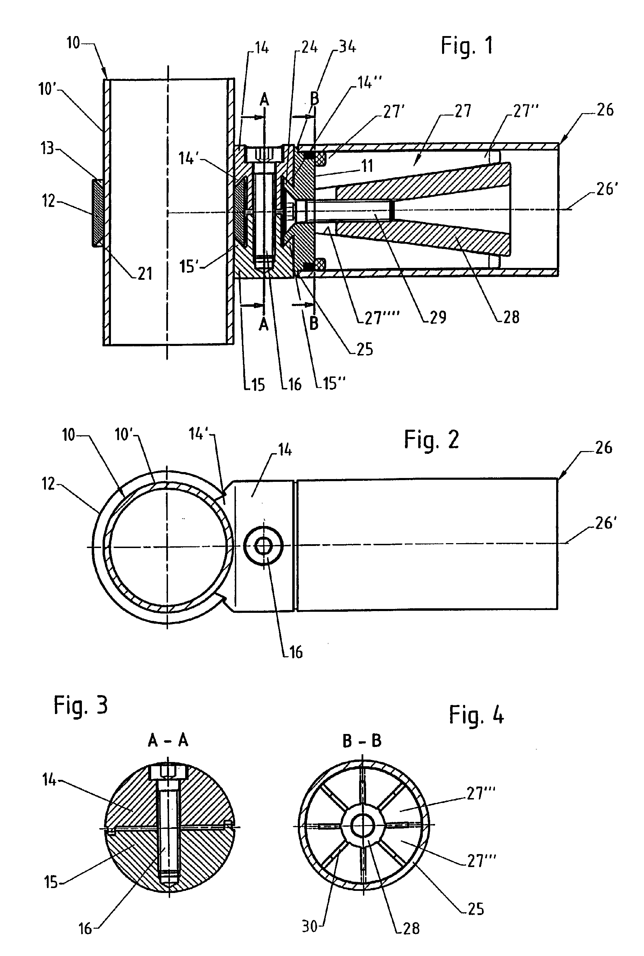

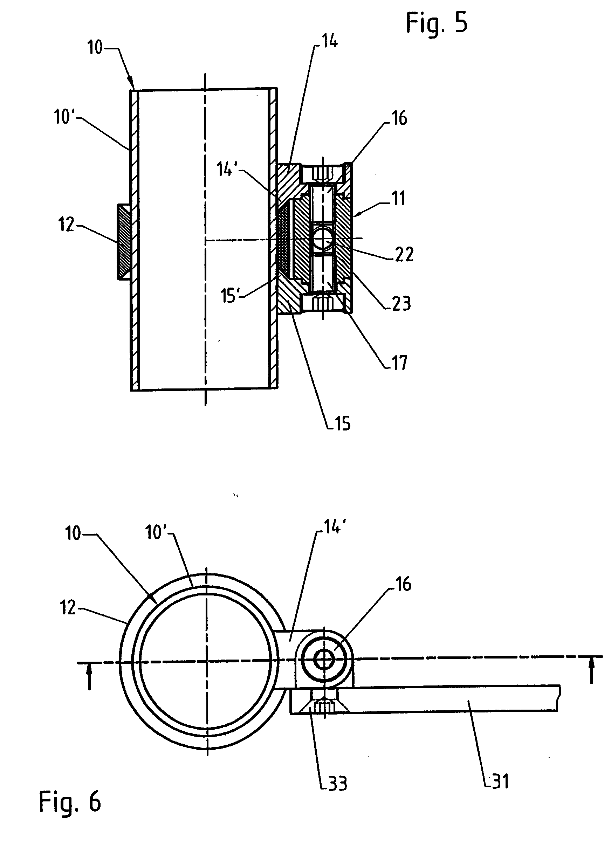

Die in den Figuren dargestellten Verbinder dienen der Herstellung einer mechanischen Verbindung zwischen einem Stangenelement 10 und einem daran anzuschließenden Teil. Fig.1 zeigt als Stangenelement 10 ein kreiszylindrisches Rohr und als anzuschließendes Teil ebenfalls ein Rohr 26, während Fig.6 als anzuschließendes Teil eine Platte 31 zeigt. Das Stangenelement könnte auch ein rechteckiges oder quadratisches Rohr sein.

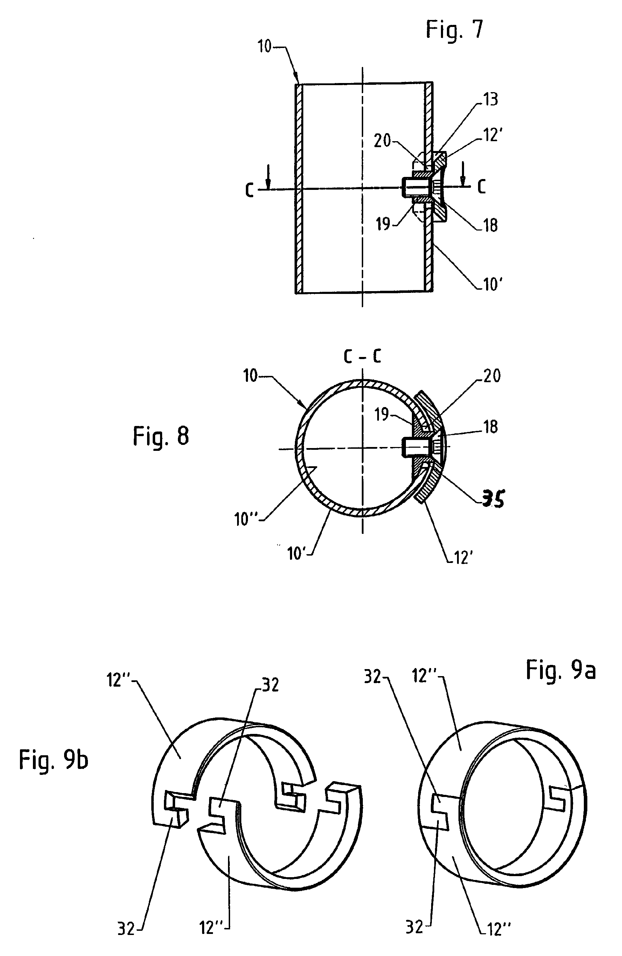

Wesentlicher Bestandteil des Verbinders ist ein Ringelement 12,12' in unterschiedlichen Ausführungsformen. Die Fig.1 bis 6 zeigen als Ringelement 12,12' einen in sich geschlossenen einstückigen Ring 12. Der Ring 12 umgreift das Stangenelement 10 und liegt an dessen Außenumfang 10' dicht an, ohne dabei zu klemmen. Infolgedessen kann der Ring 12 über die Enden des Stangenelements 10 aufgeschoben werden, sofern diese frei sind. Sofern die Enden des Stangenelements 10 nicht frei sind, also durch Konstruktionsteile besetzt sind, die ein Aufschieben des Rings 12 verhindern, kann der Ring 12 gemäß den Fig.9a,9b zweiteilig ausgebildet sein, also aus zwei Teilen 12'',12''' bestehen, die gemeinsam einen kompletten Ring 12 bilden.

Die in den Fig.9a,9b dargestellten Teile 12'',12''' sind gleichgroß ausgebildet, umfassen also jeweils die Hälfte den Außenumfangs 10' des Stangenelements. An ihren einander zugewendeten und einander überlappenden Enden sind die Teile 12'',12''' jeweils mit Haken 32 versehen. Die Haken 32 sind so ausgebildet, daß sie nicht vorstehen sondern vollständig innerhalb des Querschnitts des kompletten Rings zu liegen kommen. Durch Ansetzen der Teile 12'',12''' an den Außenumfang 10' des Stangenelements 10 und Verschieben dieser Teile in Achsrichtung des Stangenelements 10 im Sinne einer Verhakung der Haken 32 kommt ein in sich geschlossenes Ringelement 12,12' zur Ausbildung.

Ein einstückiger oder ein aus mehreren Teilen bestehender Ring 12 hat einen trapezförmigen Querschnitt. Dieser Querschnitt ist so angeordnet, daß seine Flanken 21 dem Außenumfang 10' des Stangenelements 10 zugewendet sind. Infolgedessen werden Eingriffstaschen 13 gebildet, also der horizontale Raum bzw. die Hinterschneidung, die der Ring 12 mit dem Stangenelement 10 bildet. Diese Eingriffstaschen 13 sind ringförmig ausgebildet, laufen also ununterbrochen um das Stangenelement 10 herum. Die Eingriffstaschen 13 dienen dem Eingriff von Klemmbacken 14,15. Die Klemmbacken 14,15 haben Eingriffsvorsprünge 14',15', die der Form der Eingriffstaschen 13 angepaßt sind. Die Eingriffsvorsprünge 14',15' füllen die Eingriffstaschen 13 praktisch aus, wobei sich die Klemmbacken 14,15 an dem Außenumfang 10' des Stangenelements 10 abstützen, wozu sie entsprechend ringförmig großflächig ausgebildet sind. Fig.2 läßt die teilzylindrische Kontur der Klemmbacke 14 in der Nähe des Stangenelements 10 erkennen. Das gilt auch für die Klemmbacken 14,15 der Fig.5,6, die in der Aufsicht schmaler ausgebildet sind, als die Klemmbacken 14,15 der Fig.1,2.

Da bei der Ausführungsform der Fig.1,2 ein Rohr 26 angeschlossen werden soll, sind die Klemmbacken 14,15 gemäß Fig.3 dem Außenumfang angepaßt, so daß also der von ihnen gebildete Gesamtumfang dem Außenumfang des Rohrs 26 in etwa entspricht.

Die Klemmbacken 14,15 aller Ausführungsformen werden zusammengespannt und umfassen damit das Ringelement 12,12'. Die Verspannung bewirkt infolge der angeschrägten Eingriffsvorsprünge 14',15', daß das Ringelement 12,12' außerhalb des Verbinderbereichs fest gegen den Außenumfang 10' des Stangenelements 10 gezogen wird und sich infolgedessen nicht mehr in Achsrichtung dieses Elements bewegen kann.

Eine ordnungsgemäße Verspannung der beiden Klemmbacken 14,15 kann mit Spannschrauben 16,17 erreicht werden. Fig.1 zeigt eine Ausführungsform mit einer einzigen Spannschraube 16. Diese durchsetzt eine Durchgangsbohrung der Klemmbacke 14 und ist in eine Gewindesackbohrung der Klemmbacke 15 eingeschraubt. Beide Klemmbacken überbrücken praktisch die gesamte Höhe des Rings 12, so daß eine entsprechende Führung der Klemmbacken 14,15 gegen seitliches Verkippen gewährleistet und eine ausreichende Stabilität der Klemmbacken erreicht werden kann. Die Klemmbacken 14,15 können auch genau querschnittsgleich ausgebildet sein, wenn die Spannschraube 16 nicht gemäß Fig.1,3 in eine Sackgewindebohrung der Klemmbacke 15 eingeschraubt wird, sondern wenn die Spannschraube 16 mit einer in der Klemmbacke 15 angeordneten Mutter zusammenwirkt.

In Fig.5 sind ebenfalls querschnittsgleiche Klemmbacken 14,15 dargestellt, die mit zwei Spannschrauben 16,17 zusammenwirken. Zwischen den Klemmbacken 14,15 befindet sich eine Innengewindehülse 23, welche die Klemmbacken 14,15 auf Distanz hält und in deren Innengewinde die Spannschrauben 16,17 hineingeschraubt sind. Die durch die Gewindehülse 23 vorgegebene Distanz zwischen den Klemmbacken 14,15 ist so gewählt, daß diese beim Anziehen der Spannschrauben 16,17 den Ring 12 mit ihren Vorsprüngen 14,15 zwischen sich einklemmen.

Die Spannschrauben 16,17 sind so kurz, daß sie einen Abstand zwischen sich lassen, in dessen Bereich sich Anschlußmittel 22 in Gestalt einer Querbohrung anordnen lassen. Die Querbohrung ist ebenfalls mit Innengewinde versehen, so daß eine Anschlußschraube 33 hineingeschraubt werden kann, die gemäß Fig.6 eine Platte 31 befestigt. Die Innengewindehülse 23 ist in diesem Fall also auch das Anschlußteil 11 für die Platte 31.

Bei der Ausführungsform der Fig.1,2 ist das Anschlußteil 11 eine Rohrabschlußscheibe, die in das Rohrinnere des Rohrs 26 eingreift und auf diese Weise zentriert ist. Mit einem Ringbund 34 wird verhindert, daß das Anschlußteil 11 in das Rohrinnere hineingeschoben werden kann. Die Rohrabschlußscheibe hat einen in der Rohrachse 26 vorspringenden Anschlußquerschnitt 24, mit dem es von den Klemmbacken 14,15 eingeklemmt werden kann. Hierzu greifen die Klemmbacken 14,15 mit Anschlußvorsprüngen 14'',15'' an dem Anschlußquerschnitt 24 an. Die Anschlußvorsprünge 14'',15'' sind in der Darstellungsebene mit demselben Querschnitt ausgebildet, wie die Anschlußvorsprünge 14',15', wobei der Anschlußquerschnitt 24 in gleicher Weise trapezförmig ausgebildet ist, wie der trapezförmige Querschnitt des Rings 12. Der Anschlußquerschnitt 24 kann jedoch senkrecht zur Darstellungsebene kreisrund sein und die Klemmbacken 14,15 sind im übrigen hierauf abgestimmt, bilden also gemeinsam eine der Formgebung des Anschlußquerschnitts 24 angepaßte Formgebung. Im Falle einer ebenen Rohrwand kann die Klemmbacke 14 gerade sein, so daß die Anschlußvorsprünge 14'',15'' senkrecht zur Darstellungsebene der Fig.1 denselben Querschnitt aufweisen.

Bei der vorbeschriebenen Ausführungsform ist das Anschlußteil 11 direkt an die Klemmbacken 14,15 angeschlossen. Es könnte aber auch ein Anschluß über ein mit den Klemmbacken fest verbundenes Verbindungsteil erfolgen.

Eine Verbindung des Anschlussteils 11 mit dem Rohr 26 erfolgt mit einem Spreizkorb 27. Der Spreizkorb 27 bildet mit einem Spreizkonus 28 und einer Spreizschraube 29 eine Baueinheit. Der Spreizkorb 27 hat eine sich zum Anschlußteil 11 hin verjüngende Ausnehmung 27^{IV}, in die der Spreizkonus 28 eingesetzt ist, der eine Innengewindebohrung hat, in die eine Spreizschraube 29 hineingeschraubt ist. Die Spreizschraube 29 durchdringt das Anschlußteil 11, nämlich die Rohrabschlußscheibe vom Anschlußquerschnitt 24 her und hält damit das Anschlußteil 11, den Spreizkorb 27 und den Spreizkonus 28 zusammen. Beim Anziehen des Spreizkonus 28 wird der Spreizkorb 27 nach außen gespreizt und setzt sich an der Innenwand des Rohrs 26 fest. Diese Montage wird vorgenommen, bevor das Anschlußteil 11 mit den Klemmbacken 14,15 des Verbinders zusammengebaut wird.

Damit der Spreizkorb 27 möglichst mit seinem gesamte Außenumfang an der Innenwand des Rohrs 26 anliegt, ist er gemäß Fig.4 mit über den Umfang gleichmäßig verteilten Längsschlitzen 30 versehen. Die Längsschlitze 30 sind wechselweise unterschiedlich ausgebildet. Gemäß Fig.4 sind zwei einander benachbarte Lamellen 27''' des Spreizkorbs 27 durch einen Längsschlitz voneinander getrennt, der vom in Fig.4 linken Korbende 27' bis in die Nähe des rechten Korbendes 27" durchläuft, wo die beiden Lamellen 27''' miteinander verbunden bzw. einstückig sind. Ein solcher Längsschlitz 30 wechselt mit solchen ab, die vom in Fig.4 rechten Korbende 27" bis in die Nähe des linken Korbendes 27' durchlaufen, wo die betreffenden Lamellen miteinander verbunden bzw. einstückig ausgebildet sind. Mit einem derartigen Spreizkorb 27 ist für die gewünschte gleichmäßige Anpressung des Außenumfangs des Spreizkorbs 27 an die Innenwand des Rohrs 26 gesorgt.

In den Fig.7,8 ist auf eine Darstellung der Klemmbacken und des Anschlußteils sowie des anzuschließenden Teils verzichtet worden. Die genannten Teile können ebenso ausgebildet sein, wie zu Fig.1,2 erläutert wurde. Aus dem Vergleich von Fig.2 und Fig.8 ist ersichtlich, daß solche Klemmbacken 14 in Bezug auf den Außenumfang 10' dieselbe Umfangslänge haben werden, wie das Teilstück 12'. Das Teilstück 12' wird infolgedessen von den Klemmbacken 14 völlig abgedeckt, so daß sich eine Außenansicht des Verbinders ergibt, die praktisch ausschließlich von der Gestaltung der Klemmbacken 14,15 bestimmt ist.

Das Teilstück 12' kann an dem Stangenelement 10 mit dem Befestigungselement 18 fest angebracht sein. Das Befestigungselement 18 ist eine Schraube, die an einem Widerlagerstück 19 des Stangenelements 10 angreift, indem es in eine Gewindebohrung dieses Widerlagerstücks 19 hineingeschraubt ist und beide Teile fest gegen das Stangenelement 10 preßt, nämlich das Teilstück 12' gegen dessen Außenumfang 10' und das Widerlagerstück gegen dessen Innenumfang 10''. In diesem Fall muß eine genaue Ausrichtung des Teilstücks 12' erfolgen, bevor der Verbinder im übrigen angebracht wird.

Das Widerlagerstück 19 muß in das Innere des hohlen Stangenelements 10 eingebracht werden. Hierzu ist in diesem Stangenelement 10 eine Durchgriffsausnehmung 20 vorgesehen, die so weit ist, daß ein verkantetes Einsetzen des Widerlagerstücks 19 in das Innere des Stangenelements 10 möglich ist. Außerdem muß das Befestigungselement 18 genügend lang sein, um geeignete Verkantungsstellungen der beteiligten Bauteile zu erreichen. Danach ist ein unverrückbares Befestigen des Teilstücks 12' am Stangenelement 10 möglich.

Falls das Teilstück 12' am Stangenelement 10 unverrückbar befestigt ist und nach dem Anbringen des Verbinders eine Korrektur der Position des Anschlußteils 11 gewünscht wird, muß der Verbinder zunächst vollständig abgebaut und danach eine Korrektur des Sitzes des Teilstücks 12' im Rahmen der Weite der Durchgriffsausnehmung 20 versucht werden. Die Richtigkeit der durchgeführten Korrektur erweist sich unter Umständen erst, nachdem der Verbinder erneut montiert wurde. Sollte die Korrektur unzutreffend sein, muß der Verbinder erneut abgebaut werden.

Es ist daher vorteilhaft, das Teilstück 12 nicht am Stangenelement 10 zu befestigen. Hierzu ist in den Fig.7,8 dargestellt, daß das Widerlagerstück 19 mit einem Ringbund 35 ausgebildet ist, der an dem Teilstück 12' abgestützt werden kann, und zwar so, daß das Stangenelement 10 nicht geklemmt wird. In diesem Fall wird der Sitz des Verbinders und damit die Position eines anzuschließenden Teils, etwa eines Rohrs 28, erst dann festgelegt, wenn das Spannteil 16,17 angezogen wird und damit das Teilstück 12' ebenso beaufschlagt, wie das Ringelement 12,12' bzw. der Ring 12. In diesem Fall wird also das Teilstück 12' vom Stangenelement 10 weggezogen und dessen Widerlagerstück 19 stützt sich an der Innenwand des Stangenelements 10 ab, so daß ein Verschieben des Verbinders am Stangenelement 10 nicht mehr möglich ist. Zuvor konnten jedoch die Klemmbacken 14,15 bzw. das Anschlußteil 11 mit dem Rohr 26 in die gewünschte Position gebracht werden. Eine Korrektur des Sitzes des Verbinders ist dann nicht mehr nötig. Eine Korrektur des Sitzes des Verbinders ist allerdings jederzeit auch nachträglich möglich, falls dies gefordert wird. Dann brauchen die Klemmbacken 14,15 jedoch nicht abgebaut zu werden, sondern es genügt ihr Lockern und ein Verschieben des Rohres 26 im Rahmen der durch die Weite der Durchgriffsausnehmung 20 vorgegebenen Möglichkeiten.

## Patentansprüche

1. Verbinder eines Stangenelements (10) mit einem Anschlußteil (11), mit einem an das Stangenelement (10), insbesondere an ein Rohr angrenzenden Ringelement (12,12'), das mindestens eine Eingriffstasche (13) hat, und mit mindestens einer betätigbaren Klemmbacke (14,15), an die das Anschlußteil (11) angeschlossen ist und die in die Eingriffstasche (13) eingreift, sich am Außenumfang (10') des Stangenelements (10) abstützt und mit einem Spannteil (16,17) am Ringelement (12,12') festlegbar ist, **dadurch gekennzeichnet, daß** das Ringelement (12, 12') an das Stangenelement (10) lose angrenzt und mit der Klemmbacke (14,15) an dem Stangenelement (10) festzuklemmen ist.

2. Verbinder nach Anspruch 1, **dadurch gekennzeichnet, daß** das Ringelement (12,12') ein das Stangenelement (10) umgreifender geschlossener Ring (12) ist.

3. Verbinder nach Anspruch 1 oder 2, **dadurch gekennzeichnet, daß** das Ringelement (12,12') einstückig ist.

4. Verbinder nach einem der Ansprüche 1 oder 2, **dadurch gekennzeichnet, daß** das Ringelement (12,12') aus zwei Teilen (12'',12''') besteht, die einen zusammengesetzten geschlossenen Ring (12) bilden.

5. Verbinder nach Anspruch 4, **dadurch gekennzeichnet, daß** die beiden Teile (12'',12''') des Ringelements (12, 12') stangenelementparallel zusammengesetzt miteinander verbunden sind.

6. Verbinder nach einem der Ansprüche 1 bis 5, **dadurch gekennzeichnet, daß** das Ringelement (12,12') als Teilstück (12') eines geschlossenen Ringes ausgebildet ist und an dem Stangenelement (10) mit einem Befestigungselement (18) lose angebracht ist.

7. Verbinder nach einem der Ansprüche 1 bis 6, **dadurch gekennzeichnet, daß** das Befestigungselement (18) an einem Widerlagerstück (19) des Stangenelements (10) angreift, und daß sich das im Inneren des Stangenelements (10) befindliche Widerlagerstück (19) mit einem das Befestigungselement (18) umfassenden und eine weite Durchgriffsausnehmung (20) durchgreifenden Ringbund (35) an dem Teilstück (12') abstützt.

8. Verbinder nach einem der Ansprüche 1 bis 7, **dadurch gekennzeichnet, daß** die Eingriffstasche (13) an den Aussenumfang (10') des Stangenelements (10) angrenzt.

9. Verbinder eines Stangenelements (10) mit einem Anschlußteil (11), mit einem an das Stangenelement (10), insbesondere an ein Rohr angrenzenden Ringelement (12,12'), das mindestens eine Eingriffstasche (13) hat, und mit mindestens einer betätigbaren Klemmbacke (14,15), an die das Anschlußteil (11) angeschlossen ist und die in die Eingriffstasche (13) eingreift, sich am Außenumfang (10') des Stangenelements (10) abstützt und mit einem Spannteil (16,17) am Ringelement (12,12') festlegbar ist, **dadurch gekennzeichnet, daß** das Ringelement (12, 12') als Teilstück (12') eines geschlossenen Ringes ausgebildet ist und an dem Stangenelement (10) mit einem Befestigungselement (18) fest angebracht ist, das an einem Widerlagerstück (19) des Stangenelements (10) angreift, und daß die Klemmbacke (14,15) an dem Teilstück (12') festklemmbar ist.

10. Verbinder nach einem der Ansprüche 1 bis 9, **dadurch gekennzeichnet, daß** das Ringelement (12,12') einen trapezförmigen Querschnitt hat, dessen Flanken (21) je eine Eingriffstasche (13) mit dem Stangenelement (10) bilden.

11. Verbinder nach einem der Ansprüche 1 bis 10, **dadurch gekennzeichnet, daß** zwei Klemmbacken (14,15) vorhanden sind, die beide das Ringelement (12,12') zwischen sich einspannen und dabei an dem Stangenelement (10) festklemmen.

12. Verbinder nach einem der Ansprüche 1 bis 11, **dadurch gekennzeichnet, daß** zwei praktisch querschnittsgleiche Klemmbacken (14,15) miteinander verschraubt sind.

13. Verbinder nach einem der Ansprüche 1 bis 12, **dadurch gekennzeichnet, daß** eine einzige Spannschraube (16) vorhanden ist, oder daß zwei Spannschrauben (16 und 17) in eine zwischen zwei Klemmbacken (14,15) vorhandene, bedarfsweise Anschlußmittel (22) aufweisende Innengewindehülse (23) eingeschraubt sind.

14. Verbinder nach einem der Ansprüche 1 bis 13, **dadurch gekennzeichnet, daß** das Anschlußteil (11) direkt an die Klemmbacke (14,15) oder an ein mit letzterer fest verbundenes Verbindungsteil angeschlossen ist.

15. Verbinder nach einem der Ansprüche 1 bis 14, **dadurch gekennzeichnet, daß** das Anschlußteil (11) mittels zweier Klemmbacken (14,15) angeschlossen ist.

16. Verbinder nach einem der Ansprüche 1 bis 15, **dadurch gekennzeichnet, daß** ein Anschlußquerschnitt (24) des Anschlußteils (11) trapezförmig ausgebildet ist.

17. Verbinder nach Anspruch 14 oder 15, **dadurch gekennzeichnet, daß** ein Anschlußquerschnitt (24) des Anschlußteils (11) einem Querschnitt des Ringelements (12, 12') in einem Eingriffstaschen (13) bildenden Bereich entspricht.

18. Verbinder nach einem der Ansprüche 1 bis 17, **dadurch gekennzeichnet, daß** das Anschlußteil (11) eine sich an einer Stirnkante (25) eines anzuschließenden Rohrs (26) abstützende Rohrabschlußscheibe ist, die einen in einer Rohrachse (26') vorspringenden Anschlußquerschnitt (24) aufweist.

19. Verbinder nach einem der Ansprüche 1 bis 18, **dadurch gekennzeichnet, daß** in einem anzuschließenden Rohr (26) ein Spreizkorb (27) angeordnet ist, der in einer sich zum Anschlußteil (11) verjüngenden Ausnehmung (27^{IV}) einen Spreizkonus (28) aufweist, in den eine das Anschlußteil (11) durchsetzende und sich daran abstützende Spreizschraube (19) eingeschraubt ist.

20. Verbinder nach Anspruch 19, **dadurch gekennzeichnet, daß** der Spreizkorb (27) Längsschlitze (30) hat, die wechselweise von einem Korbende (27';27") bis in die Nähe des anderen Korbendes (27";27') reichen.

21. Verbinder nach einem der Ansprüche 1 bis 20, **dadurch gekennzeichnet, daß** an dem Ringelement (12,12') mehrere über dessen Umfang verteilte Klemmbacken (14,15) mit an ihnen angeschlossenen Anschlußteilen (11) angreifen.
